# EUROPÄISCHE PATENTANMELDUNG

(11) **EP 1 710 175 A2**
(43) Veröffentlichungstag der Anmeldung: **11.10.2006**
(21) Anmeldenummer: 06405091.7
(22) Anmeldetag: 02.03.2006
(51) Int. Cl.: B65G 1/137

(54) **Regallageranlage zur Aufnahme von palettierten Gütern**

(30) Priorität: 30.03.2005 CH 5602005
(71) Anmelder: Dreier Systemtechnik AG, 4153 Reinach (CH)
(72) Erfinder: Dreier, Erich, 4245 Kleinlützel (CH)
(74) Vertreter: Rottmann, Maximilian

(57) **Zusammenfassung**

Die Regallageranlage zur Aufnahme von palettierten Gütern ist mit einer Vielzahl von Regaleinheiten (2) versehen, die in Regalreihen (3a-3h) angeordnet sind. Zwischen zwei benachbarten Regalreihen ist jeweils eine Gasse (6a,6b,6c,6d) angeordnet. In jeder Gasse (6a,6b,6c,6d) ist zumindest ein in Längsrichtung der Gasse verfahrbares Regalbediengerät (12a,12b,12c,12d) angeordnet, das mit einem Lastaufnahmemittel versehen ist. Die Regalbediengeräte (12a,12b,12c,12d) sind möglichst weit oben an der Anlage verfahrbar angeordnet. Parallel zu den Gassen (6a,6b,6c,6d) verlaufen Kommissionierstollen (8a,8b,8c), welche mittels flurgebundenen Fahrzeugen (F) befahrbar sind. Quer zu den Kommissionierstollen (8a,8b,8c) sind Verbindungsstollen (9a,9b,9c,9d) angeordnet, welche die Gassen (6a,6b,6c,6d) queren. Um sicherzustellen, dass die sich hin- und her bewegenden Regalbediengeräte (12a,12b,12c,12d) bzw. Lastaufnahmemittel die in den Verbindungsstollen (9a,9b,9c,9d) aufhaltenden Personen nicht gefährden, wird das jeweilige Lastaufnahmemittel beim Queren eines Verbindungsstollens soweit angehoben, dass sich Personen frei darunter bewegen können.

## Beschreibung

Die Erfindung betrifft eine Regallageranlage zur Aufnahme von palettierten Gütern, insbesondere zur Aufnahme und zum Kommissionieren von auf Paletten aufgenommenen Gütern, nach dem Oberbegriff des Anspruchs 1.

Aus der EP-A-1 136 395 ist ein System zum Kommissionieren von in Regallagern befindlichen Artikeln bekannt. Das System umfasst eine Mehrzahl paralleler Regalreihen zum Einlagern von palettierten Artikeln. Zwischen den Regalreihen sind abwechselnd Einlager-Gassen und Pick-Gassen angeordnet. Zwei solcher Regalreihen bilden ein Modul, wobei zwischen den beiden Regalreihen eines Moduls jeweils eine Einlager-Gasse mit mindestens einem Einlager-Fahrzeug angeordnet ist. In jeder Pick-Gasse ist mindestens ein Picker-Fahrzeug zum Picken der zu kommissionierenden Artikel angeordnet. Das jeweilige Einlager-Fahrzeug ist als flurgebundenes Regalbediengerät ausgebildet, während das jeweilige Picker-Fahrzeug auf Schienen verfahrbar ist. In den Regelreihen sind Pufferbahnen ausgebildet, welche die Übergabe einer Palette von der einen Regalreihe in die unmittelbar benachbarte Regalreihe ermöglichen. Um eine Palette von der einen Regalreihe an die benachbarte Regalreihe zu übergeben, muss die Palette von einem Picker-Fahrzeug in eine Pufferbahn eingeschoben werden, wo sie vom Regalbediengerät übernommen und danach in die in der anderen Regalreihe ausgebildete Pufferbahn übergeben wird. Danach kann die Palette von dem gegenüberliegenden Picker-Fahrzeug übernommen werden. Es versteht sich, dass das Übergeben einer Palette von der einen an die andere Regalreihe äusserst umständlich und zeitaufwändig ist.

Aus der DE-A-102 50 964 ist ein System zum dynamischen Bereitstellen und Kommissionieren, insbesondere von Paletten und anderen Lagereinheiten, bekannt. Dieses System umfasst einen Lagerbereich, der aus einer Vielzahl von Lagerscheiben besteht. Die Lagerscheiben sind in Regalfächer unterteilt, wobei pro Regalfach drei mit Gütern bestückte Lagereinheiten aufgenommen werden können. Zwischen zwei Regalscheiben verläuft jeweils eine Gasse. Am Boden der jeweiligen Gasse sind flurgebundene, fahrerlose Transportfahrzeuge angeordnet, die entlang von entsprechenden Spuren verkehren können. Im Bereich der obersten Regalfächer einer Lagerscheibe sind flurlose Lagerbediengeräte angeordnet, die entlang den Gassen verfahrbar sind. Das jeweilige Lagerbediengerät besteht aus einer Verfahreinheit und einem über Seile damit verbundenen Lastaufnahmemittel, welches vertikal verfahrbar ist. Obwohl ein derartiges System viele Vorteile aufweist, eignet es sich nicht zur Ausbildung von Regallageranlagen, bei welchen das Kommissionieren der Güter durch Personen erfolgt, welche innerhalb der Regallageranlage verkehren müssen.

Die Erfindung zielt darauf ab, eine Regallageranlage zur Aufnahme von palettierten Gütern, insbesondere zur Aufnahme und zum Kommissionieren von auf Paletten aufgenommenen Gütern, derart weiterzubilden, dass sie einfach aufgebaut ist, dass die flurgebundenen Fahrzeuge wegoptimiert zwischen den Kommissionierstollen verkehren können, wobei die flurgebundenen Fahrzeuge von Personen bedient werden sollen, und wobei für die die flurgebundenen Fahrzeuge bedienenden Personen die Gefahr eliminiert werden soll, mit einem Regalbediengerät zu kollidieren oder von einem Regalbediengerät bzw. von dessen Lastaufnahmemittel verletzt zu werden.

Hierzu wird nach der Erfindung eine Regallageranlage gemäss dem Anspruch 1 bereitgestellt.

Bevorzugte Ausführungsbeispiele der Regallageranlage sind in den abhängigen Ansprüchen 2 bis 16 umschrieben.

Nachfolgend wird ein bevorzugtes Ausführungsbeispiel der Erfindung anhand von Zeichnungen näher erläutert. In diesen Zeichnungen zeigt:
- Fig. 1: eine Draufsicht auf die unterste Ebene einer Regallageranlage;
- Fig. 2: die Regallageranlage in einem Querschnitt;
- Fig. 3: die Regallageranlage in einem Längsschnitt;
- Fig. 4a und 4b: zwei Detailansichten der Regallageranlage in vergrösserter Darstellung, und
- Fig. 5a-5c: Detailansichten eines alternativen Ausführungsbeispiels.

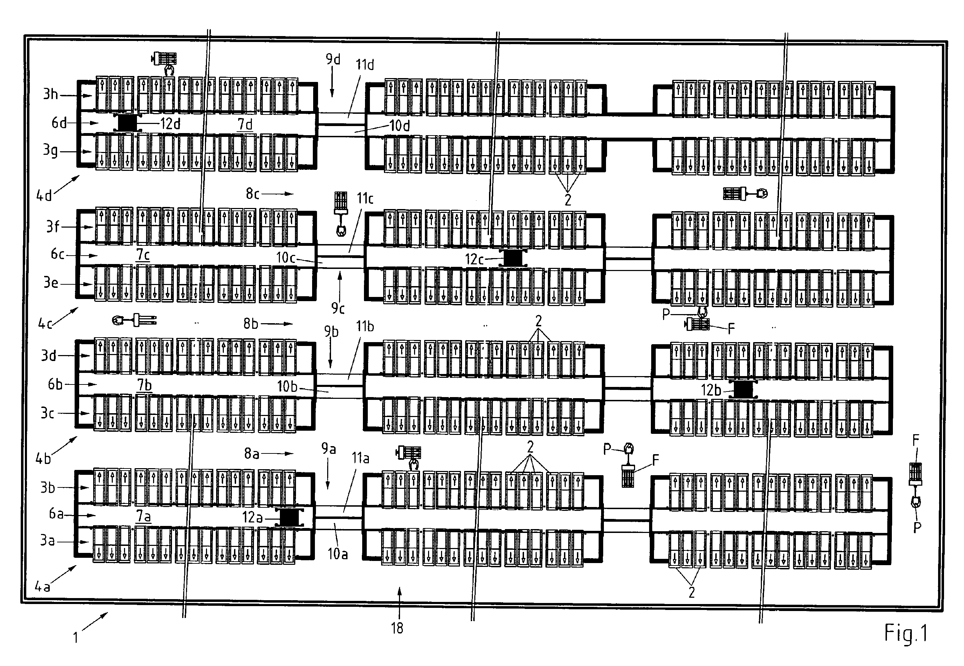

Anhand der Fig. 1, welche in vereinfachter Darstellung eine Draufsicht auf die unterste Ebene 18 einer Regallageranlage 1 zeigt, wird der prinzipielle Aufbau der Regallageranlage näher erläutert. Die Regallageranlage 1 ist als sogenannte Mann zur Ware Kommissionieranlage ausgebildet, bei der die Güter in Regaleinheiten 2 aufgenommen bzw. eingelagert sind und von einer Person in der Anlage entnommen werden. Dazu bewegt sich die Person innerhalb der Anlage und entnimmt der jeweiligen Regaleinheit die gewünschte Anzahl Güter, welche entsprechend der zusammenzustellenden Liefereinheit auf einem mit der Person in der Anlage verkehrenden Fahrzeug zwischengelagert werden. Nachdem die Liefereinheit in der Anlage fertig zusammengestellt ist, wird sie zu einer Übergabestelle gefahren, welche nicht gesondert dargestellt ist. Die in der Anlage eingelagerten Güter sind vorzugsweise auf Paletten aufgenommen. Wenn nachfolgend jeweils von palettiert bzw. Paletten die Rede ist, ist darunter nicht zwingend eine Palette im herkömmlichen Sinn zu verstehen, sondern der Begriff Palette wird nebst der Bezeichnung für herkömmliche Paletten grundsätzlich auch für alle Arten von Untersätzen wie beispielsweise Gitterboxen, Behälter, Tablare, Kassetten und dgl. verwendet.

Die Regallageranlage besteht aus einer Vielzahl von Regaleinheiten 2, die in Regalreihen 3a-3h angeordnet sind. Jede Regalreihe 3a-3h umfasst eine Vielzahl von horizontal nebeneinander und vertikal übereinander liegenden Regaleinheiten 2. Die einzelne Regaleinheit 2 dient dabei der Aufnahme von einer oder mehreren mit Gütern bestückten Palette(n). Eine solche Regaleinheit 2 kann in Form eines Stellplatzes oder eines Lagerkanals ausgebildet sein, wobei als Stellplatz im allgemeinen eine Regaleinheit mit einer Lagertiefe für eine bis zwei Paletten bezeichnet wird, während ein Lagerkanal üblicherweise der Aufnahme von drei und mehr Paletten dient. Jeweils zwei Regalreihen bilden einen Regalblock 4a, 4b, 4c, 4d. Zwischen den Längsseiten von benachbarten Regalblöcken 4a, 4b, 4c, 4d verläuft jeweils ein Kommissionierstollen 8a, 8b, 8c, während zwischen den Stirnseiten von benachbarten Regalblöcken 4a, 4b, 4c, 4d jeweils ein Verbindungsstollen 9a, 9b, 9c, 9d angeordnet ist.

Zwischen den zwei benachbarten Regalreihen 3a, 3b, 3c, 3d, 3e, 3f, 3g, 3h eines Regalblocks 4a, 4b, 4c, 4d verläuft jeweils eine Gasse 6a; 6b; 6c; 6d, welche sich in vertikaler Richtung über sämtliche Regaleinheiten 2 hin erstreckt. Pro Gasse 6a; 6b; 6c; 6d ist zumindest ein in Längsrichtung der Gasse 6a; 6b; 6c; 6d verfahrbares Regalbediengerät 12a, 12b, 12c, 12d angeordnet, welches hier nur schematisch angedeutet ist. Zwischen jeweils zwei Regalblöcken sind die parallel zu den Gassen 6a; 6b; 6c; 6d verlaufenden Kommissionierstollen 8a, 8b, 8c angeordnet, welche mittels flurgebundenen, personenbedienten Fahrzeugen F befahrbar sind. Als flurgebundene, personenbediente Fahrzeuge kommen beispielsweise Kommissionierflurförderzeuge, Transportwagen, Gabelstapler etc. in Frage. Als flurgebundene Fahrzeuge F sind im vorliegenden Beispiel Elektrokommissionierfahrzeuge eingezeichnet, welche von einer Person P geführt werden. Die flurgebundenen Fahrzeuge sind vorzugsweise nicht schienengebunden und werden von einer Person gezogen, gestossen, gefahren oder gesteuert. Zur Aufnahme der Güter auf dem Elektrokommissionierfahrzeug können auf letzterem eine oder mehrere Paletten bzw. Rollcontainer aufgenommen werden.

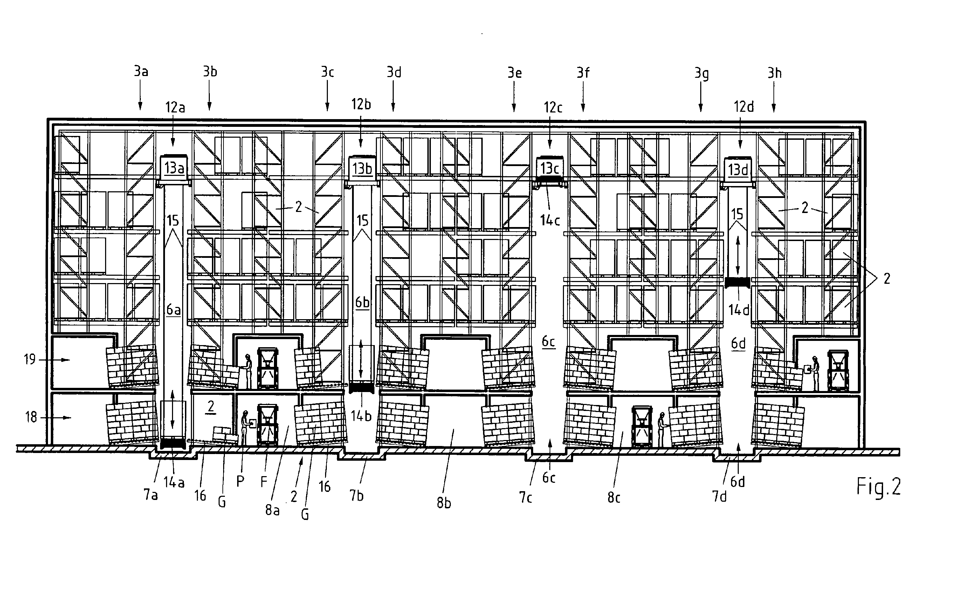

Die Kommissionierstollen 8a, 8b, 8c erstrecken sich in vertikaler Richtung über die Höhe einer Regaleinheit 2 hinweg, wobei oberhalb der Kommissionierstollen wiederum zu Regalreihen gruppierte Regaleinheiten angeordnet sind, wie nachfolgend anhand der Fig. 2 noch näher erläutert wird. Um die einzelnen Kommissionierstollen 8a, 8b, 8c entlang einer Regalreihe 3a-3h mehrmals miteinander zu verbinden, sind die quer zu den Kommissionierstollen 8a, 8b, 8c verlaufenden Verbindungsstollen 9a, 9b, 9c, 9d vorgesehen, welche die Gassen 6a; 6b; 6c; 6d queren. Über diese Verbindungsstollen 9a, 9b, 9c, 9d kann eine Person zusammen mit einem Fahrzeug F wegoptimiert von einem in einen anderen Kommissionierstollen 8a, 8b, 8c gelangen.

Das jeweilige Regalbediengerät 12a, 12b, 12c, 12d ist als flurfrei arbeitendes Gerät ausgebildet, welches oberhalb des Bodens 7a, 7b, 7c, 7d der jeweiligen Gasse 6a; 6b; 6c; 6d, vozugsweise im Bereich der obersten oder zweitobersten Regalreihe, verfahrbar abgestützt ist. Pro Regalreihe muss zumindest ein Regalbediengerät 12a, 12b, 12c, 12d so weit oben angeordnet sein, dass es Paletten aus der obersten Regalreihe entnehmen kann. Wie insbesondere aus der Fig. 2 ersichtlich ist, besteht das jeweilige Regalbediengerät 12a, 12b, 12c, 12d aus einer elektromotorisch angetriebenen Laufkatze 13a, 13b, 13c, 13d, an der ein Lastaufnahmemittel 14a, 14b, 14c, 14d mittels Seilen 15 oder Riemen abgestützt ist. Obwohl aus dieser Darstellung nur zwei Seile 15 pro Regalbediengerät 12a, 12b, 12d eingezeichnet sind, ist das jeweilige Lastaufnahmemittel 14a, 14b, 14c, 14d mittels vier Seilen 15 an der Laufkatze 13a, 13b, 13c, 13d befestigt. Das Lastaufnahmemittel 14a, 14b, 14c, 14d ist, wie durch Doppelpfeile angedeutet, in vertikaler Richtung entlang den Regaleinheiten 2 verfahrbar. Das Lastaufnahmemittel 14a, 14b, 14c, 14d ist vorzugsweise als Plattform ausgebildet, auf der eine Teleskopgabel oder ein Kanalfahrzeug angeordnet ist, mittels welcher bzw. welchem die palettierten Güter aus einer Regaleinheit entnommen werden können. Im weiteren verfügt das Lastaufnahmemittel 14a, 14b, 14c, 14d über einen Arretiermechanismus, mittels welchem die Plattform zum Entnehmen der palettierten Güter an einer Regaleinheit 2 kraft- und/oder formschlüssig angedockt werden kann.

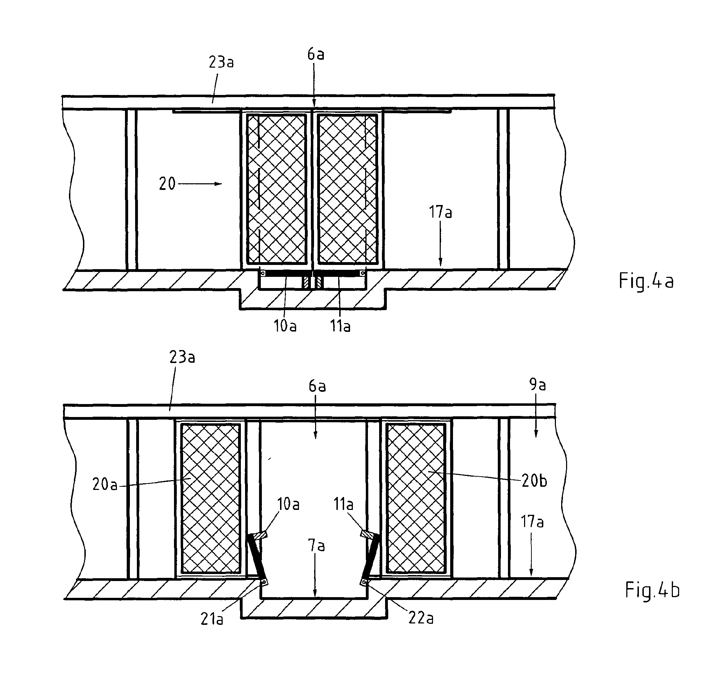

Der Boden 7a, 7b, 7c, 7d der jeweiligen Gasse 6a; 6b; 6c; 6d ist gegenüber der Verkehrsfläche, auf der die Elektrokommissionierfahrzeuge verkehren, durchgehend vertieft, damit das Lastaufnahmemittel 14a, 14b, 14c, 14d des jeweiligen Regalbediengeräts 12a, 12b, 12c, 12 soweit abgesenkt werden kann, dass damit Güter in die untersten Regaleinheiten 2 ein- und ausgelagert werden können. Damit die jeweilige Gasse 6a; 6b; 6c; 6d von den flurgebundenen Fahrzeuge F problemlos überfahren werden kann, ist der Boden des jeweiligen Verbindungsstollens 9a, 9b, 9c, 9d mit je zwei Brückenelementen 10a, 11a; 10b, 11b; 10c, 11 c; 10d, 11 d versehen, welche hochklappbar sind, wie nachfolgend anhand der Fig. 4 noch näher erläutert wird.

Aus dem Querschnitt gemäss Fig. 2 ist im weiteren ersichtlich, dass die Regallageranlage zwei vertikal übereinander angeordnete Kommissionierebenen 18, 19 aufweist, und dass oberhalb der Kommissionierstollen 8a, 8b, 8c Regaleinheiten 2 angeordnet sind. Das jeweilige Regalbediengerät 12a, 12b, 12c, 12d dient in erster Linie dazu, die palettierten Güter in die oberhalb der Kommissionierebenen 18, 19 angeordneten Regaleinheiten 2 ein- und auszulagern sowie den Nachschub der palettierten Güter aus den oberen Regaleinheiten in die unteren, in den Kommissionierebenen 18, 19 angeordneten Regaleinheiten sicherzustellen. Die in den Kommissionierebenen 18, 19 angeordneten Regaleinheiten 2 sind mit je einer zu dem jeweiligen Kommissionierstollen 8a hin geneigten Rollbahn 16 versehen. Durch diese Rollbahnen 16 wird bewirkt, dass sich eine durch das Regalbediengerät in die jeweilige Regaleinheit 2 eingeschobene Palette zusammen mit den darauf aufgenommenen Gütern G der Schwerkraft folgend bis an das dem Kommissionierstollen 8a zugewandte Ende der jeweiligen Regaleinheit 2 verschiebt, wo sich die Palette an einem Anschlag (nicht dargestellt) anlegt. Die auf der jeweiligen Palette aufgenommenen Güter G können von der sich im jeweiligen Kommissionierstollen 8a aufhaltenden Person P von der Palette entnommen und an das flurgebundene Fahrzeug F übergeben werden. Wie aus der Figur 1 ersichtlich ist, sind die Kommissionierstollen 8a, 8b, 8c über Verbindungsstollen 9a, 9b, 9c, 9d miteinander verbunden. Über diese Verbindungsstollen 9a, 9b, 9c, 9d kann eine Person von einem in einen anderen Kommissionierstollen 8a, 8b, 8c gelangen. Eine grundsätzliche Problematik von Regallageranlagen mit Verbindungsstollen 9a, 9b, 9c, 9d besteht darin, dass die Verbindungsstollen 9a, 9b, 9c, 9d die Gassen, in denen die Regalbediengeräte 12a, 12b, 12c, 12d verkehren, queren. Dadurch besteht die Gefahr, dass eine sich in einem Verbindungsstollen 9a, 9b, 9c, 9d aufhaltende Person von einem sich bewegenden Regalbediengerät 12a, 12b, 12c, 12d oder von dessen Lastaufnahmemittel 14a, 14b, 14c, 14d verletzt wird. Um dies zu verhindern, wurden folgende Vorkehrungen getroffen: Das jeweilige Regalbediengerät 12a, 12b, 12c, 12d wird derart gesteuert, dass es beim Queren eines Verbindungsstollens 9a, 9b, 9c, 9d das Lastaufnahmemittel 14a, 14b, 14c, 14d soweit anhebt, dass eine Person zusammen mit einem flurgebundenen Fahrzeug darunter frei verkehren kann. Dies ist daher ohne weiteres möglich, da die Regalbediengeräte 12a, 12b, 12c, 12d oberhalb der Kommissionierebenen 18, 19 verfahrbar abgestützt sind, und das jeweilige Lastaufnahmemittel 14a, 14b, 14c, 14d bis auf die Höhe der jeweiligen Laufkatze 13a, 13b, 13c, 13d angehoben werden kann. Als zusätzliche Sicherheitsmassnahme sind die Verbindungsstollen 9a, 9b, 9c, 9d mit einer Überdachung versehen, welche derart dimensioniert ist, dass von einem angehobenen Lastaufnahmemittel ggf. herunterfallende Güter die Überdachung nicht durchbrechen können. Es versteht sich, dass das jeweilige Lastaufnahmemittel 14a, 14b, 14c, 14d schon vor dem Queren eines Verbindungsstollens 9a, 9b, 9c, 9d auf die notwendige Höhe angehoben wird. Als Richtwert kann angegeben werden, dass das jeweilige Regalbediengerät 12a, 12b, 12c, 12d das Lastaufnahmemittel 14a, 14b, 14c, 14d beim Queren eines Verbindungsstollens 9a, 9b, 9c, 9d in vertikaler Richtung zumindest um zwei Meter über den Boden der obersten Kommissionierebene 19 bzw. die Überdachung anhebt.

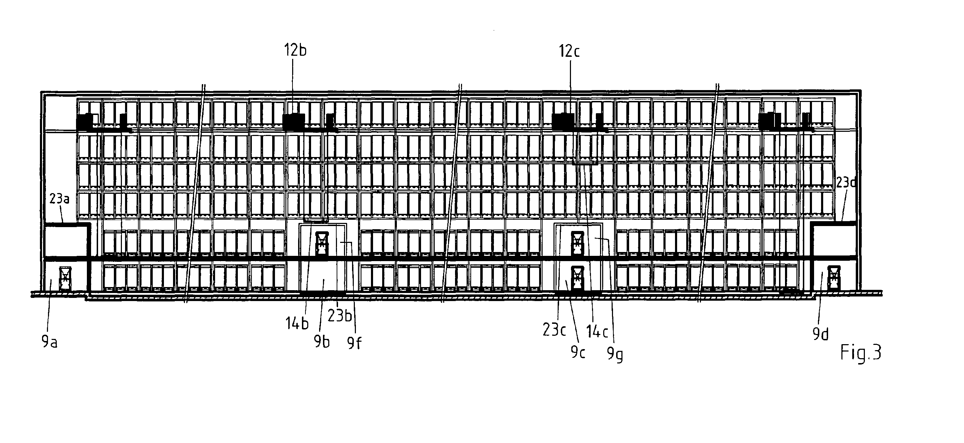

Aus der Fig. 3, welche die Regallageranlage in einem Längsschnitt zeigt, ist ersichtlich, dass das jeweilige Regalbediengerät 12b, 12c beim Queren eines Verbindungsstollens 9b, 9f; 9c, 9g das Lastaufnahmemittel 14b, 14c über den oberen 9f, 9g der vertikal übereinander liegenden Verbindungstollen 9b, 9f; 9c, 9g anhebt, so dass die Personen und die flurgebundenen Fahrzeuge in den Verbindungsstollen 9b, 9f; 9c, 9g frei verkehren können. Aus dieser Darstellung ist insbesondere auch ersichtlich, dass jeweils der oberste Verbindungsstollen mit einer Überdachung 23a, 23b, 23c, 23d versehen ist. Es versteht sich, dass bei Vorhandensein einer Überdachung das jeweilige Lastaufnahmemittel 14b, 14c beim Queren eines Verbindungsstollens 9b, 9f; 9c, 9g über die Überdachung 23a, 23b, 23c, 23d angehoben wird.

Die Fig. 4a und 4b zeigen in vergrösserter Darstellung einen Querschnitt durch eine Gasse 6a im Bereich eines Verbindungsstollens 9a. Im Übergangsbereich von einem Verbindungsstollen 9a zu einer Gasse 6a sind Schiebetüren 20 angeordnet, welche im normalen Betrieb geschlossen sind, um den Zugang von einem Verbindungsstollen 9a zu der jeweiligen Gasse 6a zu verwehren. Aus der Fig. 4a sind die beiden L-förmig ausgebildeten Brückenelemente 10a, 11a ersichtlich, welche im heruntergeklappten Zustand eine Brücke zum Überfahren der Gasse 6a bilden. Über die beiden Brückenelemente 10a, 11a, deren Oberseite mit der die Verkehrsfläche bildenden Oberfläche 17a des Verbindungsstollens 9a fluchten, kann ein flurgebundenes Fahrzeug F die jeweilige Gasse 6a problemlos überfahren. Um die jeweilige Gasse 6a mit einer fahrbaren Leiter, einer Hebebühne oder dgl. befahren zu können, können die Schiebetüren 20a, 20b geöffnet werden, wie dies in der Fig. 4b gezeigt ist. Gleichzeitig mit dem Öffnen der Schiebetüren 20a, 20b werden die beiden Brückenelemente 10a, 11a hochgeschwenkt, indem sie um die Drehpunkte 21a, 22a verschwenkt werden. Durch das Hochschwenken der Brückenelemente 10a, 11a wird gleichzeitig der Durchgang durch den entsprechenden Verbindungsstollen 9a gesperrt. Ggf. können oberhalb der Brückenelemente 10a, 11a zusätzlich noch Sicherheitstüren (nicht dargestellt) angeordnet werden, welche mit dem Hochschwenken der Brückenelemente 10a, 11a aktiviert werden, um den Zutritt zu der jeweiligen Gasse 6a zu verhindern. Nach dem Hochschwenken der Brückenelemente 10a, 11a kann ein Arbeitsgerät wie beispielsweise eine Leiter oder eine Hebebühne von der Stirnseite her in die jeweilige Gasse 6a eingefahren oder eingeschoben werden. Dieses Arbeitsgerät kann über die geöffneten Schiebetüren 20a, 20b und die hochgeklappten Brückenelemente 10a, 11a entlang der Gasse 6a verschoben oder bewegt werden. Vorzugsweise sind an den Stirnseiten der jeweiligen Gasse absperrbare Zugänge vorgesehen, die im Rahmen eines Sicherungskonzepts nur dann geöffnet werden können, wenn zugleich die Brückenelemente 10a, 11a hochgeklappt und die Schiebetüren 20 geöffnet sind, so dass eine Personen weder von einem Verbindungsstollen in die entsprechende Gasse gelangen noch einen Verbindungsstollen durchqueren kann. Andererseits wird über die jeweilige Gasse der Durchgang von einem Regalblock zu dem benachbarten Regalblock ermöglicht. Aus der Fig. 4b ist zudem ersichtlich, dass der Boden 7a der jeweiligen Gasse 6a unterhalb der Verkehrsebene 17a angeordnet ist.

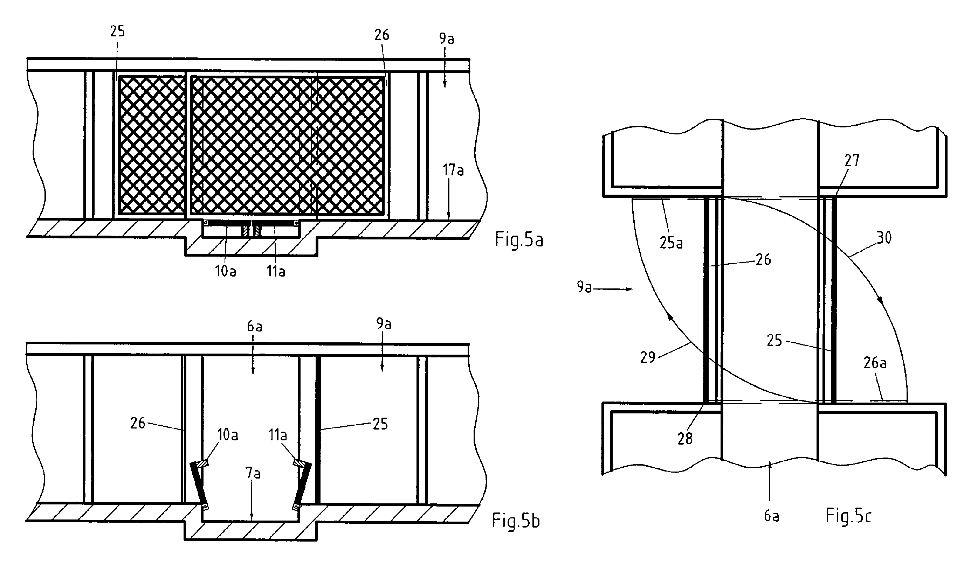

Die Fig. 5a, 5b und 5c zeigen wiederum einen Querschnitt durch eine Gasse 6a im Bereich eines Verbindungsstollens 9a, wobei im Übergangsbereich von dem Verbindungsstollen 9a zu der Gasse 6a anstelle der vorgängig beschriebenen Schiebetüren Schwenktüren 25, 26 angeordnet sind. Die Fig. 5a zeigt in einer Seitenansicht die zwei sich im Ausgangszustand befindenden Schwenktüren 25, 26, welche mittels Scharnieren oder dgl. einseitig drehbar abgestützt sind. In dem Ausgangszustand verwehren die beiden Schwenktüren 25, 26 wiederum den Zugang von einem Verbindungsstollen 9a zu der jeweiligen Gasse 6a, so dass Personen und Fahrzeuge in dem jeweiligen Verbindungsstollen 9a frei verkehren können. Die beiden Brückenelemente 10a, 11a befinden sich im heruntergeklappten Zustand und bilden eine Brücke zum Überfahren der Gasse 6a.

Die Fig. 5b zeigt die beiden Schwenktüren 25, 26 in dem Revisionszustand, in dem sie sowohl den Durchgang durch den Verbindungsstollen 9a wie auch den Zugang von einem Verbindungsstollen 9a zu der jeweiligen Gasse 6a versperren. Nach dem Verschwenken der beiden Schwenktüren 25, 26 vom Ausgangs- in den Revisionszustand können die beiden Brückenelemente 10a, 11a hochgeschwenkt werden, so dass ein auf dem Boden 7a der jeweiligen Gasse 6a verkehrendes Arbeitsgerät entlang der jeweiligen Gasse 6a von einem Regalblock zu dem benachbarten Regalblock bewegt werden kann.

Aus der Fig. 5c, welche eine Draufsicht auf die Gasse 6a im Bereich des Verbindungsstollens 9a zeigt, ist der Bewegungsablauf der beiden Schwenktüren 25, 26 während des Verschwenkens vom Revisions- in den Ausgangszustand ersichtlich. Die erste Schwenktüre 25 wird dazu um 90° um den durch die Scharniere gebildeten Drehpunkt 27 entlang der Linie 29 in den andeutungsweise eingezeichneten Ausgangszustand 25a bewegt, während die zweite Schwenktüre 26 um den Drehpunkt 28 entlang der Linie 30 in den Ausgangszustand 26a bewegt wird. Die beiden Schwenktüren 25, 26 sind derart dimensioniert, dass sie im Revisionszustand den Durchgang durch den jeweiligen Verbindungsstollen 9a komplett verschliessen, so dass ein Zutritt oder Zugang aus dem Verbindungsstollen 9a an der jeweiligen Schwenktüre vorbei in die Gasse 6a verunmöglicht wird. Vorzugsweise sind Sicherheitsschalter (nicht dargestellt) vorgesehen, welche mit einer für die Steuerung des Lagers notwendigen Steuereinheit derart verbunden sind, dass die Regalbediengeräte nicht bewegt werden können bzw. blockiert sind, wenn sich zumindest eine entlang der jeweiligen Gasse angeordnete Schwenktüre nicht in dem Ausgangszustand befindet.

Wenn sich die beiden Schwenktüren 25, 26 im Revisionszustand befinden, wird dem Wartungspersonal ggf. der Eintritt in eine Gasse von der Stirnseite her ermöglicht und zugleich sichergestellt, dass keine Personen über die Verbindungsstollen in den Bereich einer Gasse gelangen können, so dass in der jeweiligen Gasse ein Arbeitsgerät wie beispielsweise eine Hebebühne zum Beheben von Störungen und/oder zum Warten der Regalbediengeräte ungehindert verkehren kann. Sobald sich zumindest eine Schwenktüre nicht in dem Ausgangszutand befindet, können die Regalbediengeräte nicht bewegt werden, so dass die von einem Regalbediengerät potenziell ausgehende Verletzungsgefahr für sich allenfalls in der jeweiligen Gasse aufhaltende Personen eliminiert wird.

Ein Vorteil der erfindungsgemäss ausgebildeten Regallageranlage besteht darin, dass Personen darin wegoptimiert verkehren können, indem sie über die Kommissionierstollen und die Verbindungsstollen ohne grössere Umwege praktisch von jeder Regaleinheit zu einer beliebig anderen Regaleinheit gelangen können. Durch die spezielle Anordnung, Ausgestaltung und Steuerung der Regelbediengeräte wird sichergestellt, dass die Personen beim Benutzen der die Gassen querenden Verbindungsstollen weder durch ein Regelbediengerät bzw. dessen Lastaufnahmemittel gefährdet noch behindert werden. Das verfahrbare Abstützen der Regelbediengeräte oberhalb der Gassen hat den weiteren Vorteil, dass keine Schienen oder dgl. am Boden der Gassen vorgesehen werden müssen, welche das Queren einer Gasse mit einem flurgebundenen Fahrzeug stören oder behindern könnten. Durch das Vorsehen von Schwenktüren kann der Durchgang durch einen Verbindungsstollen schnell und einfach gesperrt werden, während gleichzeitig die entsprechende Gasse 6a in Längsrichtung freigegeben wird, so dass ein Arbeitsgerät entlang der jeweiligen Gasse 6a bewegt werden kann.

## Patentansprüche

1. Regallageranlage zur Aufnahme von palettierten Gütern, insbesondere zur Aufnahme und zum Kommissionieren von auf Paletten aufgenommenen Gütern, mit einer Vielzahl von Regaleinheiten (2), die in Regalreihen (3a-3h) angeordnet sind, wobei zwischen zwei benachbarten Regalreihen jeweils eine Gasse (6a, 6b, 6c, 6d) angeordnet ist und pro Gasse (6a, 6b, 6c, 6d) zumindest ein in Längsrichtung der Gasse verfahrbares, mit einem Lastaufnahmemittel (14a, 14b, 14c, 14d) versehenes Regalbediengerät (12a, 12b, 12c, 12d) angeordnet ist, und wobei parallel zu den Gassen (6a, 6b, 6c, 6d) verlaufende Kommissionierstollen (8a, 8b, 8c) ausgebildet sind, welche mittels flurgebundenen Fahrzeugen (F) befahrbar sind, **dadurch gekennzeichnet, dass**
quer zu den Kommissionierstollen (8a, 8b, 8c) verlaufende, die Gassen (6a, 6b, 6c, 6d) querende Verbindungsstollen (9a, 9b, 9c, 9d) angeordnet sind, welche zumindest einzelne Kommissionierstollen (8a, 8b, 8c) miteinander verbinden, wobei die Kommissionierstollen (8a, 8b, 8c) wie auch die Verbindungsstollen (9a, 9b, 9c, 9d) mittels personenbedienten Fahrzeugen (F) befahrbar sind, und wobei das jeweilige Regalbediengerät (12a, 12b, 12c, 12d) entweder derart ausgebildet ist,
dass es als flurfrei arbeitendes Gerät ausgebildet ist, welches oberhalb des Bodens der jeweiligen Gasse (6a, 6b, 6c, 6d) verfahrbar abgestützt ist und das Lastaufnahmemittel (14a, 14b, 14c, 14d) beim Queren eines Verbindungsstollens (9a, 9b, 9c, 9d) soweit anhebt, dass der jeweilige Verbindungsstollen (9a, 9b, 9c, 9d) in vertikaler Richtung überfahren wird und Personen sowie Fahrzeuge ungehindert darin verkehren können,
oder dass Mittel vorgesehen sind, welche das jeweilige Regalbediengerät (12a, 12b, 12c, 12d) daran hindern, in den Bereich eines Verbindungsstollens (9a, 9b, 9c, 9d) zu fahren, wenn sich eine Person oder ein Gegenstand darin befindet, und/oder
Mittel (20) vorgesehen sind, welche ein Betreten, Queren, Eindringen oder Befahren des jeweiligen Verbindungsstollens (9a, 9b, 9c, 9d) verhindern, wenn sich ein Regalbediengerät (12a, 12b, 12c, 12d) im Bereich dieses Verbindungsstollens (9a, 9b, 9c, 9d) befindet oder daran ist, in den Bereich dieses Verbindungsstollens (9a, 9b, 9c, 9d) einzufahren.

2. Regallageranlage nach Anspruch 1, **dadurch gekennzeichnet, dass** die jeweilige Regalreihe (3a-3h) zumindest drei in vertikaler Richtung übereinander angeordnete Regaleinheiten (2) aufweist, und das jeweilige Regalbediengerät (12a, 12b, 12c, 12d) auf der Höhe der obersten, oder zweitobersten Regaleinheiten (2) verfahrbar abgestützt ist.

3. Regallageranlage nach Anspruch 2, **dadurch gekennzeichnet, dass** die Regallageranlage eine Kommissionierebene aufweist, und dass das jeweilige Regalbediengerät (12a, 12b, 12c, 12d) das Lastaufnahmemittel (14a, 14b, 14c, 14d) beim Queren eines Verbindungsstollens (9a, 9b, 9c, 9d) in vertikaler Richtung zumindest um zwei Meter über den Boden der Kommissionierebene anhebt.

4. Regallageranlage nach Anspruch 2, **dadurch gekennzeichnet, dass** die Regallageranlage zumindest zwei vertikal übereinander angeordnete Kommissionierebenen (18, 19) mit vertikal übereinander angeordneten Verbindungsstollen (9c, 9f; 9e, 9g) aufweist, und dass das jeweilige Regalbediengerät (12b, 12c) das Lastaufnahmemittel (14b, 14c) beim Queren eines Verbindungsstollens (9g, 9f) in vertikaler Richtung zumindest um zwei Meter über den Boden der obersten Kommissionierbene (19) anhebt, so dass sich ein flurgebundenes Fahrzeug und/oder eine Person unter dem Lastaufnahmemittel (14b, 14c) in dem jeweiligen Verbindungsstollen (9g, 9f) ungehindert bewegen kann/können.

5. Regallageranlage nach einem der vorhergehenden Ansprüche, **dadurch gekennzeichnet, dass** das jeweilige Regalbediengerät (12a, 12b, 12c, 12d)eine verfahrbare Laufkatze (13a, 13b, 13c, 13d) umfasst, an der das Lastaufnahmemittel (14a, 14b, 14c, 14d) mittels Seilen (15) oder Riemen aufgehängt ist.

6. Regallageranlage nach einem der vorhergehenden Ansprüche, **dadurch gekennzeichnet, dass** oberhalb der Kommissionierstollen (8a, 8b, 8c) Regaleinheiten (2) angeordnet sind.

7. Regallageranlage nach einem der vorhergehenden Ansprüche, **dadurch gekennzeichnet, dass** zumindest einzelne Kommissionierstollen (8a, 8b, 8c) zentral zwischen zwei Gassen (6a, 6b, 6c, 6d) angeordnet sind.

8. Regallageranlage nach einem der vorhergehenden Ansprüche, **dadurch gekennzeichnet, dass** zwischen einem Kommissionierstollen (8a, 8b, 8c) und der benachbarten Gasse (12a, 12b, 12c, 12d) jeweils zumindest eine Regalreihe (3a-3h) angeordnet ist.

9. Regallageranlage nach einem der vorhergehenden Ansprüche, **dadurch gekennzeichnet, dass** jeweils zwei Regalreihen (3a-3h) einen Regalblock (4a, 4b, 4c, 4d) bilden, der mit einer zentralen Gasse (6a, 6b, 6c, 6d) zur Aufnahme eines Regalbediengeräts (12a, 12b, 12c, 12d) versehen ist.

10. Regallageranlage nach Anspruch 9, **dadurch gekennzeichnet, dass** zwischen den Längsseiten von benachbarten Regalblöcken (4a, 4b, 4c, 4d) jeweils ein Kommissionierstollen (8a, 8b, 8c) verläuft, während zwischen den Stirnseiten von benachbarten Regalblöcken (4a, 4b, 4c, 4d) jeweils ein Verbindungsstollen (9a, 9b, 9c, 9d) angeordnet ist.

11. Regallageranlage nach einem der vorhergehenden Ansprüche, **dadurch gekennzeichnet, dass** die Verbindungsstollen (9a, 9b, 9c, 9d) zumindest im Bereich einer querenden Gasse (6a, 6b, 6c, 6d) mit einer Überdachung (23a, 23b, 23c, 23d) versehen sind.

12. Regallageranlage nach einem der vorhergehenden Ansprüche, **dadurch gekennzeichnet, dass** der jeweilige Verbindungsstollen (9a) im Bereich einer Gassenquerung mit Absperrmitteln (20a, 20b, 25, 26) versehen ist, welche zwischen einem Ausgangs- und einem Revisionszustand bewegbar sind, wobei sie im Ausgangszustand den Zugang von einem Verbindungsstollen (9a) in die jeweiligen Gasse (6a) verwehren, während sie im Revisionszustand den Durchgang durch eine Gasse (6a) von einem Regalblock zu dem benachbarten Regalblock freigeben.

13. Regallageranlage nach Anspruch 12, **dadurch gekennzeichnet, dass** die Absperrmittel in Form von Schwenktüren (25, 26) ausgebildet sind, welche um 90° um eine Drehachse von dem Ausgangs- in den Revisionszustand und wieder zurück bewegbar sind.

14. Regallageranlage nach einem der vorhergehenden Ansprüche, **dadurch gekennzeichnet, dass** der Boden (7a) der jeweiligen Gasse (6a) gegenüber der Verkehrsfläche (17a), auf der die flurgebundenen Fahrzeuge verkehren, vertieft angeordnet ist, wobei der jeweilige Verbindungsstollen (9a) im Bereich einer querenden Gasse (6a) mit Brückenelementen (10a, 11a) versehen ist, die zwischen einer Wirk- und einer Ruhestellung bewegbar sind, wobei die Oberseiten der Brückenelemente (10a, 11a) in der Wirkstellung zumindest annähernd mit der Verkehrsfläche (17a) fluchten.

15. Regallageranlage nach Anspruch 14, **dadurch gekennzeichnet, dass** die Brückenelemente (10a, 11a) in der Ruhestellung den Durchgang durch einen Verbindungsstollen (9a) für ein auf dem Boden (7a) der jeweiligen Gasse (6a) verkehrendes Arbeitsgerät freigeben, so dass das Arbeitsgerät entlang der jeweiligen Gasse (6a) von einem Regalblock zu dem benachbarten Regalblock bewegt werden kann.

16. Regallageranlage nach Anspruch 14 oder 15, **dadurch gekennzeichnet, dass** die Brückenelemente (10a, 11a) verschwenkbar angeordnet sind.
